# EUROPEAN PATENT APPLICATION

(11) **EP 4 775 384 A1**
(43) Date of publication of application: **15.07.2026**
(21) Application number: 25864608.2
(22) Date of filing: 18.06.2025
(51) Int. Cl.: B29C 65/18, B29C 65/00, B29C 65/32, H05B 6/36, B29D 99/00, H01M 50/105, B29L 31/00

(54) **SEALING DEVICE**

(30) Priority: 22.10.2024 KR 20240145115
(71) Applicant: LG Energy Solution, Ltd., Seoul 07335 (KR)
(72) Inventor: JUNG, Woo Jung, Daejeon 34122 (KR)
(74) Representative: Plasseraud IP
(86) International application number: PCT/KR2025/095436
(87) International publication number: WO 2026/089584

(57) **Abstract**

The present disclosure relates to a secondary battery sealing device for sealing an exterior material of a secondary battery which can be repeatedly charged and discharged. The sealing device, according to an embodiment of the present invention, comprises a pressing unit for pressing an edge of an exterior material of a secondary battery, and a transfer unit for transferring energy supplied from the outside to the pressing unit, wherein the pressing unit includes: a main body for accommodating the transfer unit and made of a non-metallic material; and a metal member coupled to an outer surface of the main body and heated by receiving energy from the transfer unit.

## Description

### TECHNICAL FIELD

### CROSS-REFERENCE TO RELATED APPLICATIONS

The present application is based on and claims priority from Korean Patent Application No. 10-2024-0145115, filed on October 22, 2024, with the Korean Intellectual Property Office, the disclosure of which is incorporated herein in its entirety by reference.

### TECHNICAL FIELD

The present disclosure relates to a secondary battery sealing device that seals an exterior material of a secondary battery capable of being repeatedly charged and discharged.

### BACKGROUND ART

Secondary batteries capable of being repeatedly charged and discharged may be classified into cylindrical, prismatic, and pouch-type batteries depending on their shape. Among them, pouch-type secondary batteries use a sheet-type pouch composed of a multilayer film of a metal layer (foil) and a resin layer coated on both surfaces of the metal layer, which may significantly reduce battery weight compared to cylindrical or prismatic batteries using a metal can.

When manufacturing such pouch-type secondary batteries, a process of sealing the internal space of the pouch by applying heat and pressure to the edge of the pouch should be accompanied. This pouch sealing may be performed by a high-temperature pouch sealing device that heats and presses the edge of the pouch.

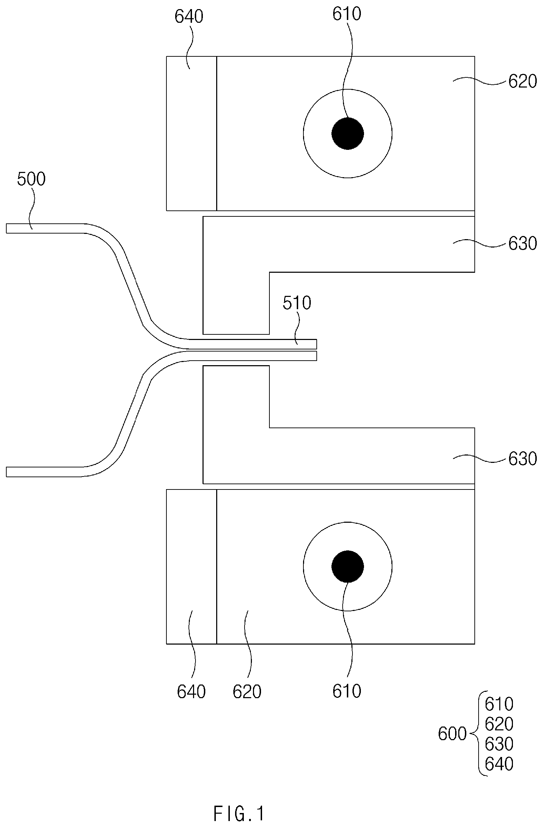

FIG. 1 is a view for describing the structure of a conventional pouch sealing device. Referring to FIG. 1, a conventional pouch sealing device 600 may be composed of a high-temperature heat source 610, a metal body 620 that accommodates the heat source 610, a press unit 630 that is connected to the lower surface of the metal body 620 and receives heat from the metal body 620, and a heat dissipation member 640 that prevents heat from the heat source 610 from being transferred to the main body 500 of the pouch.

The press unit 630 is made of a metal material and may generate heat by receiving heat from the metal body 620. This high-temperature press unit 630 may press the edge 510 of the pouch to thermally fuse the edge 510 of the pouch.

In the case of such a conventional sealing device, since the heat generated from the heat source 610 heats both the body 620 and the press unit 630, there is a problem that the heat transferred to the press unit 630 is not sufficient, resulting in a long time required for the press unit 630 to heat up.

### DISCLOSURE

### TECHNICAL PROBLEM

The present disclosure is designed to solve the problems of the related art, and therefore the present disclosure is directed to providing a sealing device for an exterior material of a secondary battery with improved heat transfer efficiency.

### TECHNICAL SOLUTION

A sealing device according to the present disclosure may include a pressure unit that presses the edge of an exterior material of a secondary battery; and a transmission unit that transmits energy supplied from the outside to the pressure unit, wherein the pressure unit may include a main body that accommodates the transmission unit and is made of a non-metallic material; and a metal member that is coupled to an outer surface of the main body and is heated by receiving energy from the transmission unit.

The main body may be made of a quartz material.

The transmission unit may include a heating coil that generates a magnetic field by being supplied with external power.

The main body may include a non-metallic plate having a flat shape in the horizontal direction; a protrusion formed on one surface of the non-metallic plate and pressing the edge of the exterior material; and a wall portion formed along the other surface edge of the non-metallic plate.

The transmission unit may be installed in a space between the wall portions.

The transmission unit may be inserted between the wall portions.

The transmission unit may be bonded to the other surface of the non-metallic plate.

A clamping member for clamping the transmission unit may be installed on the wall portion.

The clamping member may be made of a non-metallic material.

The main body may further include a lid coupled to the wall portion and sealing the space in which the transmission unit is installed.

The metal member may include a metal thin film formed on the pressure surface of the protrusion pressing the edge of the exterior material.

The metal thin film may cover the entire pressure surface of the protrusion.

An adhesive layer may be formed between the metal thin film and the pressure surface of the protrusion to bond them together.

### ADVANTAGEOUS EFFECTS

A sealing device according to the present disclosure may include a pressure unit that presses the edge of an exterior material of a secondary battery, and a transmission unit that transmits energy supplied from the outside to the pressure unit. At this time, the pressure unit may include a main body that accommodates the transmission unit and is made of a non-metallic material, and a metal member that is coupled to an outer surface of the main body and is heated by the transmission unit.

In this case, the transmission unit heats only the metal member that heats and presses the edge of the exterior material of the secondary battery, so that heat transfer efficiency may be improved when sealing the exterior material of the secondary battery.

### DESCRIPTION OF DRAWINGS

FIG. 1 is a view for describing the structure of a conventional pouch sealing device.
FIG. 2 is a view for describing the structure of a sealing device according to a first embodiment of the present disclosure.
FIG. 3 is a perspective view for describing a detailed structure of the main body of the sealing device of FIG. 2.
FIG. 4 is a view for describing a structure in which a lid is added to the main body of the sealing device of FIG. 2.
FIG. 5 is a view for describing the structure of a sealing device according to a second embodiment of the present disclosure.
FIG. 6 is a view for describing the structure of a sealing device according to a third embodiment of the present disclosure.

### BEST MODE

Hereinafter, preferred embodiments of the present disclosure will be described in sufficient detail with reference to the accompanying drawings to enable those having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the present disclosure.

Additionally, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Hereinafter, a sealing device according to the present disclosure will be described with reference to the drawings.

### First embodiment

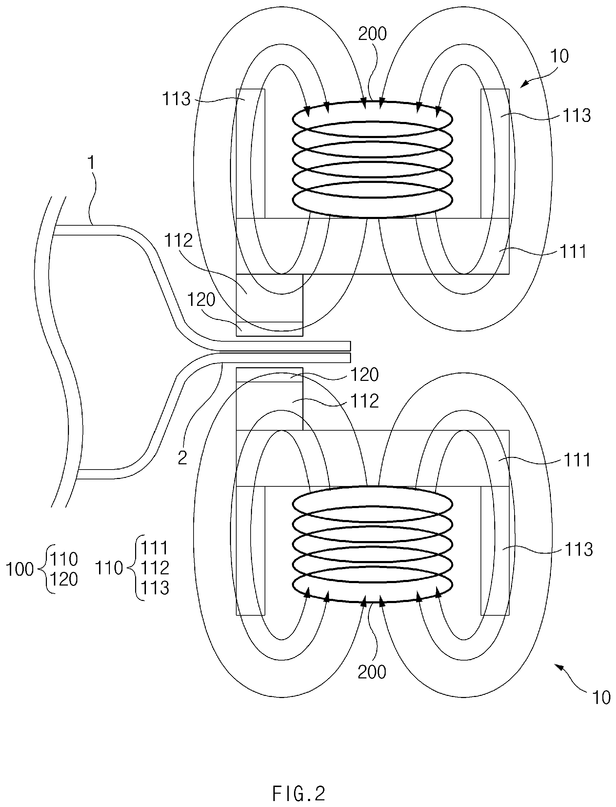

FIG. 2 is a view for describing the structure of a sealing device according to a first embodiment of the present disclosure.

Referring to FIG. 2, a sealing device 10 according to the first embodiment of the present disclosure may include a pressure unit 100 that presses the edge 2 of an exterior material of a secondary battery 1, and a transmission unit 200 that transmits energy supplied from the outside to the pressure unit 100. Here, the pressure unit 100 may include a main body 110 that accommodates the transmission unit 200 and is made of a non-metallic material, and a metal member 120 that is coupled to an outer surface of the main body 110 and is heated by receiving energy from the transmission unit 200.

In this case, the transmission unit 200 may heat only the metal member 120 that heats and presses the edge 2 of the exterior material of the secondary battery 1, excluding the non-metallic main body 110. That is, the energy generated by the transmission unit 200 may heat only the metal member 120 that heats and presses the edge 2 of the secondary battery 1 in the pressure unit 100. Therefore, since the energy of the transmission unit 200 is concentrated on the metal member 120, the metal member 120 is heated quickly, thereby quickly sealing the edge 2 of the secondary battery 1.

The secondary battery 1 is a battery capable of being repeatedly charged and discharged, and may have a structure in which an electrode assembly and an electrolyte are accommodated within an exterior material. At this time, the electrode assembly may be configured in various ways. For example, the electrode assembly may be a stacked electrode assembly in which electrodes and separators are alternately stacked, a stacked/folded electrode assembly in which electrodes and separators are alternately stacked and then folded, or a jelly roll-shaped electrode assembly in which electrodes and separators are wound.

The exterior material of the secondary battery 1 is a sealed case accommodating such an electrode assembly and an electrolyte therein, and may be configured in various ways. In particular, the exterior material may be a pouch-type exterior material formed by fusing the edges 2 of a pair of pouches. At least one of the pair of pouches may have a concave cup portion.

Additionally, each of the pair of pouches may be a laminate sheet including a metal layer such as aluminum or stainless steel. At this time, a resin layer may be formed on each of the outer and inner surfaces of the metal layer.

The metal layer may serve as a substrate that maintains mechanical strength and a barrier layer that prevents the penetration of moisture and oxygen. The metal layer may be composed of aluminum or an aluminum alloy so as to exhibit the function of improving the strength of the battery case in addition to the function of preventing the inflow or leakage of foreign substances such as gas and moisture. The aluminum alloy may include alloy numbers 8079, 1N30, 8021, 3003, 3004, 3005, 3104, 3105, and the like, which may be used alone or in combination of two or more.

A first resin layer coated on the outer surface of the metal layer should have excellent resistance to the external environment in order to protect the electrode assembly from the outside, and thus the first resin layer is required to have excellent tensile strength and corrosion resistance relative to its thickness. Materials for the first resin layer may include a polyester-based resin such as polyethylene terephthalate (PET) and polyethylene naphthalate (PEN), a polyolefin-based resin such as polyethylene and polypropylene, and the like.

A second resin layer coated on the inner surface of the metal layer may be coupled to each other to seal the internal space where the electrode assembly is accommodated, and the second resin layer may be made of a polyolefin-based resin. For example, materials for the second resin layer may include casted polypropylene (CPP), chlorinated polypropylene, polyethylene, ethylene propylene copolymer, polyethylene and acrylic acid copolymer, polypropylene and acrylic acid copolymer, and the like.

The pressure unit 100 is a member that presses the edge 2 of the exterior material of the secondary battery 1 and thermally fuses it, and may be formed in various ways. In particular, the pressure unit 100 may include a main body 110 made of a non-metallic material and a metal member 120 made of a metal material.

The main body 110, as a part of the pressure unit 100, may accommodate the transmission unit 200. The main body 110 may have various shapes. For example, as illustrated in FIG. 2, the main body 110 may include a plate 111 serving as a base, a protruding member 112 that protrudes from one side of the plate 111 and is coupled to a metal member 120, and a plurality of wall portions 113 erected on the other side of the plate 111.

The plate 111, the protruding member 112, and the wall portion 113 constituting the main body 110 may all be made of a non-metallic material. Various non-metallic materials may be used for the main body 110. When the main body 110 is made of a non-metallic material, energy is not transmitted to the main body 110 by the transmission unit 200, and thus the energy transmitted by the transmission unit 200 may be concentrated on the metal member 120. This will be described in detail later.

In particular, the main body 110 may be made of a quartz material. When the main body 110 is made of a quartz material, it may secure high wear resistance and insulation, and there is an advantageous effect of maintaining its mechanical properties even when the metal member 120 is heated due to its low coefficient of thermal expansion. Additionally, quartz has high chemical stability, and thus if the main body 110 is made of quartz, there is an advantageous effect of preventing wear caused by chemical substances.

The metal member 120 is coupled to the main body 110 and may be a member that receives energy from the transmission unit 200. The metal member 120 may be coupled to one surface of the protruding member 112 of the main body 110. The protruding member 112 protrudes toward the edge 2 of the secondary battery 1 and is a member that presses the edge 2, so that the metal member 120 may be a part that directly contacts the edge 2 when sealing the secondary battery 1.

The metal member 120 receives energy from the transmission unit 200 and is heated to a high temperature, so that the metal member 120 may press the edge 2 of the secondary battery 1 while in a high temperature state. In this case, each of the edges 2 of a pair of secondary batteries 1 is thermally fused by receiving heat and pressure, thereby sealing the internal space of the pouch of the secondary battery 1.

The transmission unit 200 receives energy from the outside and transmits the energy to the metal member 120, and may be formed in various ways. For example, the transmission unit 200 is a heating coil connected to an external power source and supplied with current, and may heat the metal member 120 by forming a magnetic field. That is, the metal member 120 may be heated by the electromagnetic induction of the transmission unit 200, which is a heating coil.

Specifically, when the transmission unit 200 is a heating coil, the magnetic field formed by the coil heats only the metal member 120 made of a metal material without heating the main body 110 made of a non-metallic material, thereby concentrating energy on the metal member 120. That is, the metal member 120 may be effectively heated, so that the metal member 120 may be quickly heated up to the temperature required for sealing the edge 2 of the secondary battery 1.

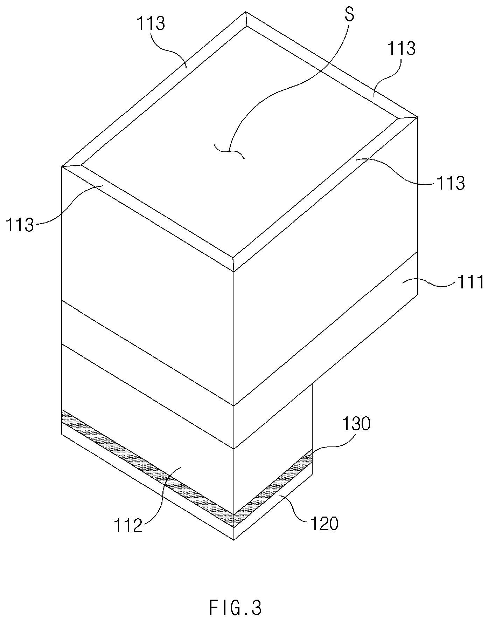

Meanwhile, FIG. 3 is a perspective view for describing a detailed structure of the main body of the sealing device of FIG. 2.

Referring to FIG. 3, the main body 110 may include a non-metallic plate 111 having a flat shape in the horizontal direction, a protrusion 112 formed on one surface of the non-metallic plate 111 and pressing the edge 2 of the exterior material, and a wall portion 113 formed along the other surface edge of the non-metallic plate 111.

The non-metallic plate 111 is made of quartz, and may have a flat rectangular plate shape in the horizontal direction. A protrusion 112 may be formed on one surface of the non-metallic plate 111. Like the non-metallic plate 111, the protrusion 112 may be made of a quartz material, and a flat pressure surface for pressing the edge 2 of the secondary battery 1 may be formed on the protrusion 112. The metal member 120 described above may be coupled to this pressure surface.

Meanwhile, a plurality of wall portions 113 may be formed on the other surface of the non-metallic plate 111. The wall portions 113, like the non-metallic plate 111, may be made of a quartz material. These wall portions 113 may be formed along the edge of the non-metallic plate 111 to form a receiving space S in which the transmission unit 200 is accommodated. That is, the transmission unit 200 may be installed in the receiving space S formed between these wall portions 113.

The transmission unit 200 may be installed in the receiving space S in various ways. For example, the transmission unit 200 is provided inside the receiving space S, and may be bonded to the other surface of the non-metallic plate 111 to be fixed in position. Specifically, the non-metallic plate 111 and one end of the transmission unit 200 may be bonded using an adhesive material.

Additionally, the non-metallic plate 111 and one end of the transmission unit 200 may be coupled using a curable resin. In this case, after applying liquid resin to the other surface of the non-metallic plate 111, the transmission unit 200 may be inserted. Thereafter, when the liquid resin hardens, the transmission unit 200 may be fixed to the other surface of the non-metallic plate 111.

Meanwhile, the metal member 120 is a metal member coupled to the pressure surface of the protrusion 112 of the main body 110, and may be configured to directly contact the edge 2 of the secondary battery 1 when sealing the secondary battery 1. The contact surface of the metal member 120 that directly contacts the edge 2 of the secondary battery 1 may have a flat shape.

Apart from the contact surface, the metal member 120 may have various shapes. For example, the metal member 120 may be a metal thin film formed on the pressure surface of the protrusion 112. In this case, the metal member 120 is formed to be thin, thereby having a small overall heat capacity, and thus may be heated up to a high temperature state even when a relatively small amount of energy is transmitted by the transmission unit 200. Additionally, this metal thin film may cover the entire pressure surface of the protrusion 112.

Meanwhile, the metal thin film and the protrusion 112 may be coupled in various ways. For example, the metal thin film may be thinly deposited on the pressure surface of the protrusion 112. Additionally, an adhesive layer 130 may be formed between the metal thin film and the pressure surface of the protrusion 112 to bond them together. The adhesive layer 130 may be formed in various ways. For example, the adhesive layer 130 may be composed of an adhesive tape or a cured adhesive material.

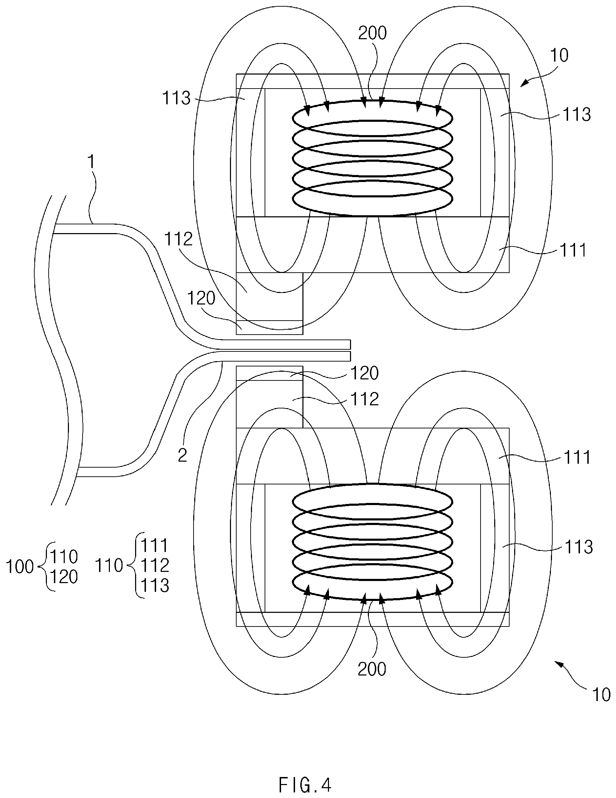

FIG. 4 is a view for describing a structure in which a lid is added to the main body of the sealing device of FIG. 2.

Referring to FIG. 4, the main body 110 may include a lid 114 coupled to the wall portions 113 and sealing the space in which the transmission unit 200 is installed. The lid 114 is coupled to the wall portions 113 to cover the open receiving space S, and may be made of a non-metallic material. In particular, the lid 114 may be made of a quartz material.

When the lid 114 is made of a quartz material, it may secure high wear resistance and insulation, and there is an advantageous effect of maintaining the mechanical properties of the lid 114 even when the metal member 120 positioned in the nearby area is heated due to its low coefficient of thermal expansion.

In this way, when the lid 114 is included in the main body 110, the receiving space S is sealed, and thus the transmission unit 200 provided in the receiving space S may be effectively protected from the external environment.

### Second embodiment

The sealing device according to the second embodiment of the present disclosure differs from the first embodiment in that the transmission unit is inserted between the wall portions. Contents in common with the first embodiment will be omitted as much as possible, and the second embodiment will be described focusing on differences. That is, it is obvious that contents not described in the second embodiment may be considered as contents of the first embodiment if necessary.

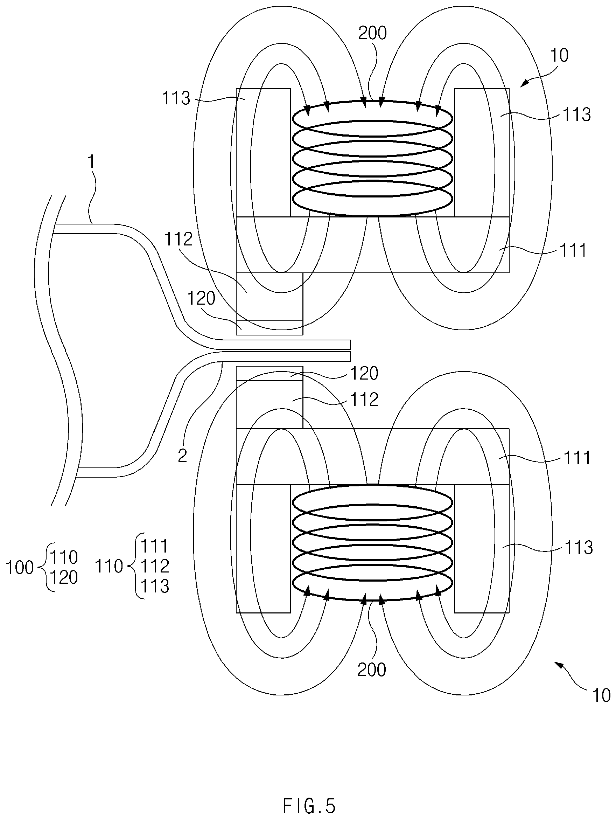

FIG. 5 is a view for describing the structure of a sealing device according to a second embodiment of the present disclosure.

Referring to FIG. 5, in the sealing device 10 according to the second embodiment of the present disclosure, the transmission unit 200 may be inserted between the wall portions 113. Specifically, the shape and volume of the receiving space S surrounded by the wall portions 113 may be substantially the same as the shape and volume of the transmission unit 200.

As described above, the transmission unit 200 may be a cylindrical coil, and thus the receiving space S surrounded by the wall portions 113 may have a cylindrical shape corresponding to the coil. In this case, there is an advantageous effect of fixing the transmission unit 200 to the receiving space S without a separate member such as an adhesive material or a clamping member. Additionally, even when the sealing device 1 is subjected to external impact, there is an advantageous effect of maintaining the position of the transmission unit 200 within the receiving space S.

### Third embodiment

The sealing device according to the third embodiment of the present disclosure differs from the first and second embodiments in that the transmission unit is fixed by a clamping member installed on the wall portion. Contents in common with the first and second embodiments will be omitted as much as possible, and the third embodiment will be described focusing on differences. That is, it is obvious that contents not described in the third embodiment may be considered as contents of the first and second embodiments if necessary.

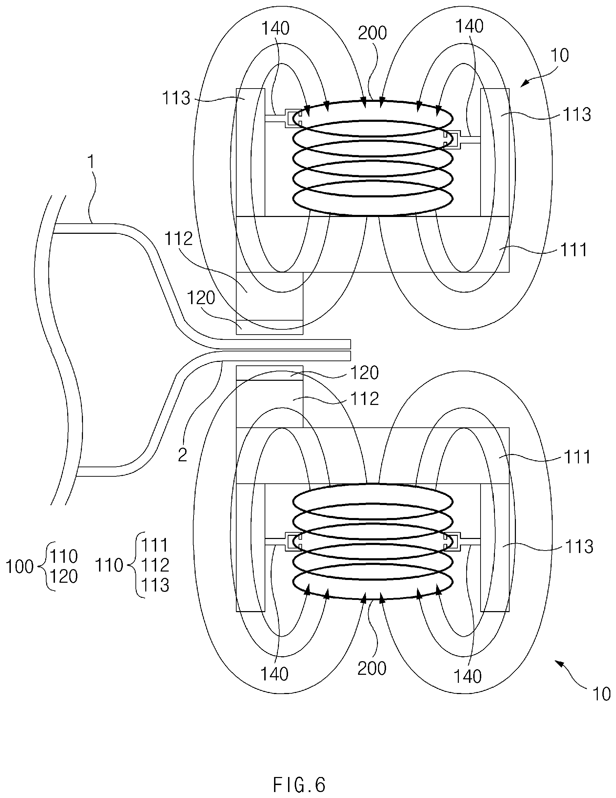

FIG. 6 is a view for describing the structure of a sealing device according to a third embodiment of the present disclosure.

Referring to FIG. 6, in the sealing device 1 according to the third embodiment of the present disclosure, a clamping member 140 for clamping the transmission unit 200 described above may be installed on the wall portion 113 formed on the other surface of the main body 110. In this case, the transmission unit 200 is fixed by the clamping member 140 while being provided at a predetermined position within the receiving space S, and thus even when the sealing device 1 is subjected to external impact, there is an advantageous effect of maintaining the position of the transmission unit 200 within the receiving space S.

The clamping member 140 is a member in which one end is installed on the wall portion 113 and the other end is toward the transmission unit 200 provided in the receiving space S, and one end of the clamping member 140 may be installed on the wall portion 113 in various ways. For example, one end of the clamping member 140 may be fixed to the wall portion 113 while being inserted into a groove formed in the wall portion 113. Additionally, a fixing unit for fixing one end of the clamping member 140 may be separately installed on the wall portion 113.

Meanwhile, the other end of the clamping member 140 acts as a clamp for clamping the transmission unit 200, and when the transmission unit 200 is a heating coil, the clamping member 140 may clamp a part of the heating coil wound multiple times.

Additionally, the clamping member 140 may be made of a non-metallic material. In this case, the clamping member 140 is free from the influence of a magnetic field, so that the magnetic field generated by the transmission unit 200, which is a heating coil, may not be used to heat the clamping member 140. In this case, the magnetic field generated by the heating coil may be used to heat only the metal member 120 described above, and thus there is an advantageous effect of concentrating the magnetic field energy generated by the transmission unit 200 on the metal member 120.

In particular, the clamping member 140 may be made of a quartz material among non-metals. When the clamping member 140 is made of a quartz material, it may secure high wear resistance and insulation, and there is an advantageous effect of maintaining its mechanical properties even when the metal member 120 positioned in the nearby area is heated due to its low coefficient of thermal expansion.

Additionally, quartz has high chemical stability, and thus if the clamping member 140 is made of quartz, there is an advantageous effect of preventing wear caused by chemical substances.

The present disclosure has been hereinabove described with regard to a limited number of embodiments and drawings, but the present disclosure is not limited thereto and it is obvious that a variety of modifications and variations may be made thereto by those having ordinary skill in the art within the technical aspect of the present disclosure and the scope of the appended claims and their equivalents.

### [List of Reference Numerals]

| | | | |
|---|---|---|---|
| 1: | Secondary battery | 2: | Edge |
| 10: | Sealing device | 100: | Pressure unit |
| 110: | Main body | 111: | Non-metallic plate |
| 112: | Protrusion | 113: | Wall portion |
| 114: | Lid | 120: | Metal member |
| 130: | Adhesive layer | 140: | Clamping member |
| 200: | Transmission unit | | |

## Claims

1. A sealing device comprising:
a pressure unit that presses the edge of an exterior material of a secondary battery; and
a transmission unit that transmits energy supplied from the outside to the pressure unit,
wherein the pressure unit comprises:
a main body that accommodates the transmission unit and is made of a non-metallic material; and
a metal member that is coupled to an outer surface of the main body and is heated by receiving energy from the transmission unit.

2. The sealing device according to claim 1,
wherein the main body is made of a quartz material.

3. The sealing device according to claim 2,
wherein the transmission unit comprises a heating coil that generates a magnetic field by being supplied with external power.

4. The sealing device according to claim 1,
wherein the main body comprises:
a non-metallic plate having a flat shape in the horizontal direction;
a protrusion formed on one surface of the non-metallic plate and pressing the edge of the exterior material; and
a wall portion formed along the other surface edge of the non-metallic plate.

5. The sealing device according to claim 4,
wherein the transmission unit is installed in a space between the wall portions.

6. The sealing device according to claim 5,
wherein the transmission unit is inserted between the wall portions.

7. The sealing device according to claim 5,
wherein the transmission unit is bonded to the other surface of the non-metallic plate.

8. The sealing device according to claim 5,
wherein a clamping member for clamping the transmission unit is installed on the wall portion.

9. The sealing device according to claim 8,
wherein the clamping member is made of a non-metallic material.

10. The sealing device according to claim 5,
wherein the main body further comprises a lid coupled to the wall portion and sealing the space in which the transmission unit is installed.

11. The sealing device according to claim 4,
wherein the metal member comprises a metal thin film formed on a pressure surface of the protrusion pressing the edge of the exterior material.

12. The sealing device according to claim 11,
wherein the metal thin film covers the entire pressure surface of the protrusion.

13. The sealing device according to claim 11,
wherein an adhesive layer is formed between the metal thin film and the pressure surface of the protrusion to bond them together.
